# EUROPEAN PATENT APPLICATION

(11) **EP 4 192 044 A1**
(43) Date of publication of application: **07.06.2023**
(21) Application number: 22831540.4
(22) Date of filing: 26.05.2022
(51) Int. Cl.: H04W 4/06

(54) **COMMUNICATION METHOD AND APPARATUS FOR MULTICAST AND BROADCAST SERVICE, AND MEDIUM AND ELECTRONIC DEVICE**

(30) Priority: 01.07.2021 CN 202110750895
(71) Applicant: Tencent Technology (Shenzhen) Company Limited, Shenzhen, Guangdong 518057 (CN)
(72) Inventor: LEI, Yixue, Shenzhen, Guangdong 518057 (CN)
(74) Representative: AWA Sweden AB
(86) International application number: PCT/CN2022/095154
(87) International publication number: WO 2023/273717

(57) **Abstract**

Provided in the embodiments of the present application are a communication method and apparatus for a multicast and broadcast service, and a medium and an electronic device. The communication method for a multicast and broadcast service comprises: performing multicast and broadcast service MBS negotiation with a core network network element in order to determine a transmission policy for MBS service application auxiliary information, wherein the MBS service application auxiliary information is used by the core network network element for optimising and configuring MBS service resources; on the basis of the transmission policy, acquiring service statistical data of a terminal device used for processing the MBS service in order to generate the MBS service application auxiliary information; and sending the MBS service application auxiliary information to the core network network element, such that the core network network element performs resource configuration processing for the MBS service on the basis of the MBS service application auxiliary information.

## Description

### RELATED APPLICATION

This application claims priority to Chinese Patent Application No. 202110750895.0, entitled "COMMUNICATION METHOD AND APPARATUS FOR MULTICAST AND BROADCAST SERVICE, MEDIUM, AND ELECTRONIC DEVICE" and filed with the National Intellectual Property Administration, PRC on July 01, 2021, which is incorporated herein by reference in its entirety.

### FIELD OF THE TECHNOLOGY

This application relates to the field of computer and communication technologies, and specifically, to a communication method and apparatus for a multicast and broadcast service(MBS), a medium, and an electronic device.

### BACKGROUND OF THE DISCLOSURE

Multicast and Broadcast Service (MBS), including a multicast service and a broadcast service, transmits the same content to multiple receivers. Using the broadcast service as an example, in order to reduce energy consumption of a terminal and network deployment costs, in a one-way broadcast service scenario, a network side can broadcast service content for a large quantity of terminal devices at the same time, such as TV or live streaming of events.

### SUMMARY

Embodiments of this disclosure provide a communication method and apparatus for a multicast and broadcast service(MBS), a medium, and an electronic device, so as to resolve, at least to some extent, the problem that a network side in an MBS cannot obtain service-related data of a terminal device, to improve accuracy and rationality of resource configuration in the MBS.

Other features and advantages of this disclosure become apparent through the following descriptions, or the practice of aspects of this disclosure.

According to an aspect of the embodiments of this disclosure, a communication method for an MBS is provided, including:
performing communication negotiation of an MBS through an application function entity and a core network element to determine a transmission policy of MBS application assistance information, the MBS application assistance information being used for optimizing configuration of MBS resources by the core network element;
obtaining, by the application function entity according to the transmission policy, service statistics data of a terminal device for processing the MBS, to generate the MBS application assistance information; and
transmitting, by the application function entity, the MBS application assistance information to the core network element, so that the core network element performs resource configuration processing of the MBS according to the MBS application assistance information.

According to an aspect of the embodiments of this disclosure, a communication method for an MBS is provided, including:
obtaining, by a session management function entity, a transmission policy of MBS application assistance information, the MBS application assistance information being used for optimizing configuration of MBS resources by a core network element;
receiving, by the session management function entity, MBS application assistance information according to the transmission policy, the MBS application assistance information being generated by an application function entity according to service statistics data of a terminal device for processing an MBS; and
performing, by the session management function entity, resource configuration processing of the MBS according to the MBS application assistance information.

According to an aspect of the embodiments of this disclosure, a communication apparatus for an MBS is provided, including:
a communication negotiation unit, configured to perform communication negotiation of an MBS with a core network element to determine a transmission policy of MBS application assistance information, the MBS application assistance information is used for optimizing configuration of MBS resources by the core network element;
a first obtaining unit, configured to obtain, according to the transmission policy, service statistics data of a terminal device for processing the MBS, to generate the MBS application assistance information; and
a transmission unit, configured to transmit the MBS application assistance information to the core network element, so that the core network element performs resource configuration processing of the MBS according to the MBS application assistance information.

According to an aspect of the embodiments of this disclosure, a communication apparatus for an MBS is provided, including:
a second obtaining unit, configured to obtain a transmission policy of MBS application assistance information, the MBS application assistance information being used for optimizing configuration of MBS resources by a core network element;
a receiving unit, configured to receive MBS application assistance information according to the transmission policy, the MBS application assistance information being generated by an application function entity according to service statistics data of a terminal device for processing MBS; and
a processing unit, configured to perform resource configuration processing of the MBS according to the MBS application assistance information.

According to an aspect of the embodiments of this disclosure, a computer-readable storage medium is provided, storing a computer program, the computer program, when executed by a processor, cause the processor to implement the communication method for an MBS according to the foregoing embodiments.

According to an aspect of the embodiments of this disclosure, an electronic device is provided, including: one or more processors; and a storage apparatus, configured to store one or more programs, the one or more programs, when executed by the one or more processors, causing the one or more processors to implement the communication method for an MBS according to the foregoing embodiments.

According to an aspect of the embodiments of this disclosure, a computer program product or a computer program is provided, the computer program product or the computer program including computer instructions, the computer instructions being stored in a computer-readable storage medium. A processor of a computer device reads the computer instructions from the computer-readable storage medium, and the processor executes the computer instructions, to cause the computer device to perform the communication method for an MBS provided in the foregoing embodiments.

In the technical solutions provided in some embodiments of this disclosure, the AF performs communication negotiation of the MBS through the core network element to determine the transmission policy of the MBS application assistance information, and obtains, according to the transmission policy, service statistics data of the terminal device for processing the MBS, to generate the MBS application assistance information, and transmits the MBS application assistance information to the core network element, so that the core network element performs resource configuration processing of the MBS according to the MBS application assistance information, which can help address the problem that the network side cannot obtain the service-related data of the terminal device in the MBS, thereby improving accuracy and rationality of resource configuration in the MBS.

It is to be understood that the foregoing general descriptions and the following detailed descriptions are merely for illustration and explanation purposes and are not intended to limit the scope of this disclosure.

### BRIEF DESCRIPTION OF THE DRAWINGS

Accompanying drawings herein are incorporated into and constitute a part of this specification, show embodiments that conform to this disclosure, and are used together with this specification to describe the principle of this disclosure. Apparently, the accompanying drawings in the following description show merely some embodiments of this disclosure, and a person of ordinary skill in the art may still derive other drawings from these accompanying drawings without creative efforts. In the accompanying drawings:
FIG. 1 is a schematic flowchart of data transmission in a unicast communication system and multicast communication system according to some embodiments of this disclosure.
FIG. 2 is a schematic diagram of a 5G network architecture according to some embodiments of this disclosure.
FIG. 3 is a schematic structural diagram of a 5G network architecture supporting an MBS according to some embodiments of this disclosure.
FIG. 4 is a flowchart of a communication method for an MBS according to some embodiments of this disclosure.
FIG. 5 is a flowchart of a communication method for an MBS according to some embodiments of this disclosure.
FIG. 6 is a flowchart of a communication method for an MBS according to some embodiments of this disclosure.
FIG. 7 is a schematic diagram of an interaction process between an AF and a 5GC network element according to some embodiments of this disclosure.
FIG. 8 is a block diagram of a communication apparatus for an MBS according to some embodiments of this disclosure.
FIG. 9 is a block diagram of a communication apparatus for an MBS according to some embodiments of this disclosure.
FIG. 10 is a schematic structural diagram of a computer system adapted to implement an electronic device according to an embodiment of this disclosure.

### DESCRIPTION OF EMBODIMENTS

Exemplary implementations are now described more comprehensively with reference to the accompanying drawings. However, the exemplary implementations may be implemented in various forms, and are not to be understood as being limited to the examples described herein. Instead, the implementations are provided to make this disclosure more thorough and complete and fully convey the idea of the exemplary implementations to a person skilled in the art.

In addition, the described features, structures, or characteristics in this disclosure may be combined in one or more embodiments in any appropriate manner. In the following descriptions, more specific details are provided to provide a comprehensive understanding of the embodiments of this disclosure. However, a person skilled in the art is to be aware that, the technical solutions in this disclosure may be implemented without one or more of the specific details, or another method, unit, apparatus, or step may be used.

The block diagrams shown in the accompanying drawings are merely functional entities and do not necessarily correspond to physically independent entities. That is, the functional entities may be implemented in a software form, or in one or more hardware modules or integrated circuits, or in different networks and/or processor apparatuses and/or microcontroller apparatuses.

The flowcharts shown in the accompanying drawings are merely examples for descriptions, do not need to include all content and operations/steps, and do not need to be performed in the described orders either. For example, some operations/steps may be further divided, while some operations/steps may be combined or partially combined. Therefore, an actual execution order may change according to an actual case.

"Plurality of" mentioned herein means two or more. "And/or" describes an association relationship for describing associated objects and represents that three relationships may exist. For example, A and/or B may represent the following three cases: Only A exists, both A and B exist, and only B exists. The character "/" in this specification generally indicates an "or" relationship between the associated objects.

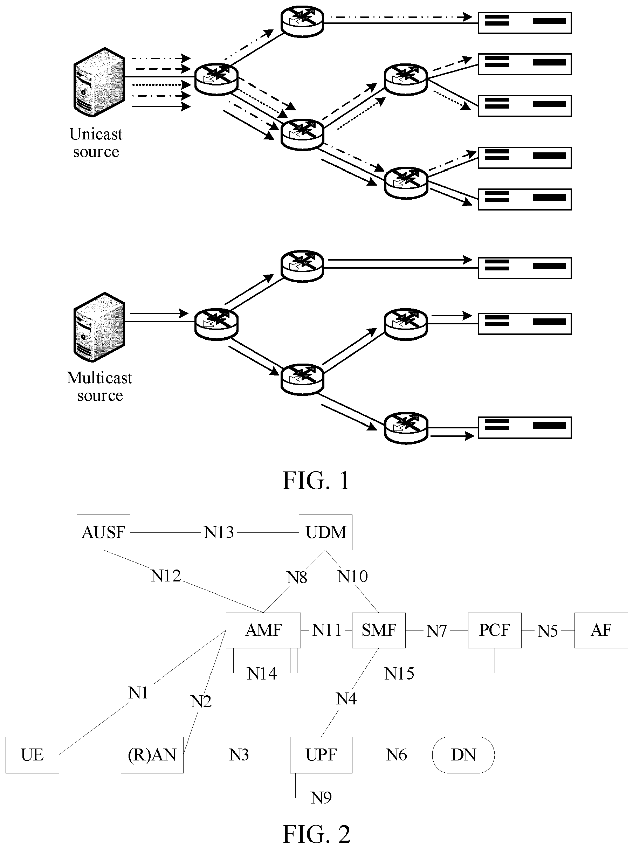

The communication manners between network nodes mainly include unicast, multicast and broadcast. "Unicast" is the most common one-to-one communication, with the advantage that a transmitting party may transmit different contents to different receivers. However, if the transmitting party needs to transmit the same content to multiple receivers, multiple copies of the same data need to be transmitted end-to-end, which is inefficient. Specifically, as shown in FIG. 1, when a unicast source transmits data to multiple receivers in a unicast manner, multiple copies of the same data need to be transmitted in an end-to-end manner (in FIG. 1, different line types represent different data streams).

"Groupcast" can also be referred to as "multicast", where a transmitting party transmits the same content to multiple receivers. Multicast is especially applicable to online video conference and online video on demand. If unicast is adopted, there will be as many teleportation processes as receivers, which is inefficient. However, if the broadcast manner of transmitting all the data without distinguishing a target is adopted, although the data can be transmitted at one time, the purpose of distinguishing a specific data receiver cannot be achieved. It can be seen that, the multicast manner can not only transmit the same data to the multiple receivers at one time, but also achieve the purpose of transmitting data only to a specific object. Specifically, as shown in FIG. 1, a multicast source may transmit the same data to multiple receivers at one time.

In "broadcast", the same content is also transmitted to multiple receivers, but receivers are not selected during transmission. Therefore, there may be a waste of network resources caused by data transmission to an unnecessary device. In addition, some receivers may not be "interested" in the broadcast content; in this case, after receiving the broadcast content, the receivers have to discard received data packets, which also causes a waste of terminal resources.

A fundamental difference between the broadcast service and the multicast service is that a (user equipment (UE) in a system can participate in the broadcast service without signing up, while a UE of the multicast service needs to sign up and be authenticated before participating in the multicast service. It is also to be noted that there are many kinds of multicast services and broadcast services. For the multicast service, the UE joins a multicast group of a corresponding service through an IP multicast address. A broadcast service corresponding to a broadcast group has a specific service area.

FIG. 2 shows a 5G network architecture defined by the 3rd Generation Partnership Project (3GPP) organization, in which 5G core network elements include an access and mobility management function (AMF), a session management function (SMF), a user plane function (UPF), a policy control function (PCF), an authentication server function (AUSF), a unified data management function (UDM), and the like. AF is an application function entity located outside the 5G core network; UE may be a 5G terminal such as a mobile phone or a tablet computer; an access network (AN) or a radio access network (RAN) may be a 5G base station; and a data network (DN) is a service server accessed by a UE.

Still referring to FIG. 2, in the 5G core network element, the AMF is responsible for terminating an N2 interface of a control plane of the base station. At the same time, the AMF is also responsible for terminating an N1 interface of the UE, to implement the encryption and integrity protection of a non-access stratum (NAS), and is responsible for functions of UE access verification, authorization management, registration, connection, reachability and mobility management, as well as a transparent transmission of a session management message between the UE and the SMF.

In addition, as shown in FIG. 2, the (R) AN interacts with the UPF through an N3 interface; the UPFs can interact with each other through an N9 interface; the UPF interacts with the SMF through an N4 interface; the UPF interacts with the DN through an N6 interface; the SMF interacts with the AMF through an N11 interface; the SMF interacts with the PCF through an N7 interface; the SMF interacts with the UDM through an N10 interface; the PCF interacts with the AF through an N5 interface; the AMFs can interact with each other through an N14 interface; the AMF interacts with the PCF through an N15 interface; the AMF interacts with the UDM through an N8 interface; the AMF interacts with the AUSF through an N12 interface; and the AUSF interacts with the UDM through an N13 interface.

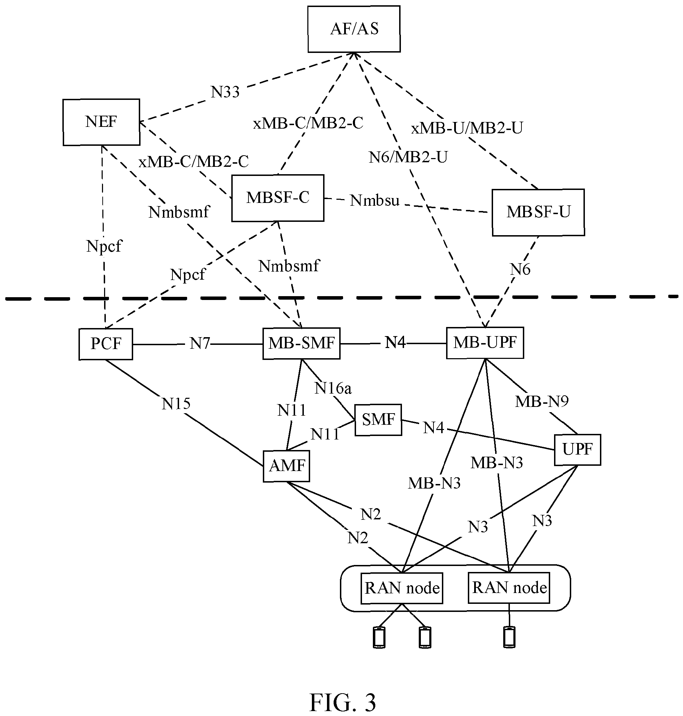

However, the system architecture shown in FIG. 2 only supports the unicast service, but does not support a 5G broadcast and multicast service. In order to support the 5G broadcast and multicast service, the system architecture shown in FIG. 3 is introduced.

The system architecture shown in FIG. 3 includes an application server (AF/AS), a network exposure function (NEF), a multicast/broadcast service function-control plane (MBSF-C), a multicast/broadcast service function-user plane (MBSF-U), a PCF, a multicast/broadcast-SMF (MB-SMF), a multicast/broadcast-UPF (MB-UPF SMF), an SMF, an AMF, a UPF, a RAN node and a UE connected to the RAN node.

Compared with the basic architecture of FIG. 2, the system architecture shown in FIG. 3 introduces new network elements MB-SMF and MB-UPF, which are specially used for supporting the 5G broadcast service and multicast service. At the same time, the PCF, the AMF, the NEF and the RAN all need to be provided with new function enhancement to provide the 5G multicast and broadcast service.

In the system architecture shown in FIG. 3, Npcf refers to an interface through which the PCF provides a service, and other network functions (NFs) transmit Npcf service request messages to the PCF through the Npcf interface, while the PCF responds to the requests and transmits notification service messages through the Npcf interface; Nmbsmf refers to an interface through which the MB-SMF provides a service, and other NFs transmit Nmbsmf service request messages to the MB-SMF through the Nmbsmf interface, while the MB-SMF responds to the requests and transmits notification service messages through the Nmbsmf interface.

In addition, the AMF interacts with the RAN through the N2 interface; the UPF interacts with the RAN node through the N3 interface; the SMF interacts with the UPF through the N4 interface; the SMF interacts with the AMF through the N11 interface; the MB-UPF interacts with the RAN node through an MB-N3 interface; the MB-SMF interacts with the AMF through the N11 interface; the MB-SMF interacts with the SMF through an N16a interface; the PCF interacts with the AMF through the N15 interface; the PCF interacts with the MB-SMF through the N7 interface; the MB-SMF interacts with the MB-UPF through the N4 interface; the MB-UPF interacts with the MBSF-U through the N6 interface; the MB-UPF interacts with the AF/AS through an N6/MB2-U interface; the MBSF-U interacts with the AF/AS through an xMB-U/MB2-U interface; the MBSF-C interacts with the AF/AS through an xMB-C/MB2-C interface; the MBSF-C interacts with the NEF through an xMB-C/MB2-C interface; and the NEF interacts with the AF/AS through an N33 interface.

In the system architecture shown in FIG. 3, the MBSF-C and the MBSF-U are not necessary. However, the MBSF-C and the MBSF-U are necessary under the following two conditions: 1. the service of the 5G MBS and 4G or 3G multimedia broadcast and multicast service (MBMS) are interconnected, that is, when the AF of the 5G and the AS of the 4G or 3G MBMS are the same entity; 2. the operator needs to process the MBS (such as transcoding a video or checking content).

In the related art, in order to reduce energy consumption of a terminal and network deployment costs, in a one-way broadcast service scenario, a network side can broadcast service content for a large quantity of UEs at the same time, such as TV or live streaming of events. In the service scenario, the 5G network does not provide more radio resources for allocation due to the increase in the quantity of UEs, which achieves great scalability. In other words, the MBS broadcast service does not need to establish a connection in advance. From the perspective of service transmission, the AF and the application server (that is, AS) do not need to establish an MBS session repeatedly, and the AF cannot know a current running status of the broadcast service through the 5G core network (5GC core). Besides, when the 5G network provides the broadcast service, in order to support a large quantity of users, ACK confirmation is usually not supported, that is, one-way broadcast is adopted. If an ACK mechanism can be introduced, the efficiency of the broadcast service will be greatly affected. In this case, when providing the broadcast service, the 5G network cannot know service receiving information of a large quantity of terminal users, that is, although the 5G network provides the MBS broadcast service, it cannot obtain an actual effect and user experience of the service.

Therefore, the embodiments of this disclosure provide a new MBS communication solution to address the problem that the network side cannot obtain the service-related data of the terminal device in the MBS service. Implementation details of the technical solutions of the embodiments of this disclosure are described below in detail.

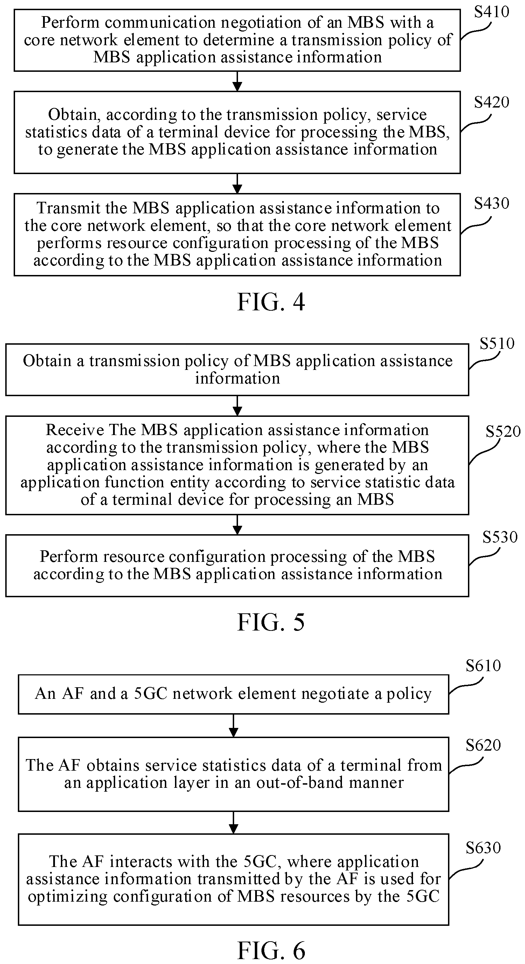

FIG. 4 is a flowchart of a communication method for an MBS according to some embodiments of this disclosure. The communication method for an MBS may be performed by an AF. Referring to FIG. 4, the communication method for an MBS includes at least step S410 to step S430. A detailed description is as follows:
In step S410, communication negotiation of an MBS is performed with a core network element to determine a transmission policy of MBS application assistance information.

In some embodiments, the MBS application assistance information is used for optimizing configuration of 5G MBS resources by a 5G core network element. The transmission policy is used for determining content, type and transmission manner of the to-be-transmitted application assistance information. In some embodiments of this application, the core network element may be a PCF. In this case, an AF may perform communication negotiation of the MBS through a NEF and the PCF; or when the AF is in a trusted network environment, the AF may directly perform the communication negotiation of the MBS with the PCF.

In some embodiments of this disclosure, the transmission policy of the MBS application assistance information includes at least one of: content of the application assistance information, confidence of the application assistance information, a sample ratio of the application assistance information, an acquisition frequency of the application assistance information, granularity information of the application assistance information, and charging information of the application assistance information.

In some embodiments, the content of the application assistance information includes at least one of: a quantity of terminals processing a specified MBS obtained by the application function entity from an application layer, a state type of a terminal processing a specified MBS obtained by the application function entity from an application layer, location information of a terminal processing a specified MBS obtained by the application function entity from an application layer, and a service statistics characteristic of a specified MBS obtained by the application function entity from an application layer (for example, playing smoothness and user experience).

In some embodiments, the state type of a terminal processing a specified MBS obtained by the application function entity from an application layer may include: an active state, an inactive state, and an idle state.

In some embodiments, the location information of the terminal includes at least one of: cell information of the terminal, tracking area information of the terminal, or geographical location information of the terminal. The cell information of the terminal is information about a current serving cell of the terminal; the tracking area is also known as TA for short; the geographical location information of the terminal is actual location information of the terminal, such as location information obtained by using the Global Positioning System (GPS) or Beidou satellite system.

In some embodiments, the granularity information of the application assistance information includes at least one of: a user granularity (that is, per-user), a terminal device granularity (that is, per-UE), and a service flow granularity (that is, per-flow).

In some embodiments, the acquisition frequency of the application assistance information refers to the amount of application assistance information obtained per unit time.

In some embodiments, the transmission policy of the MBS application assistance information determined by the AF and the core network element may include information to be transmitted, a frequency at which the information is transmitted, and the like.

In step S420, according to the transmission policy, service statistics data of a terminal device for processing the MBS is obtained, to generate the MBS application assistance information, as shown in FIG. 4.

In some embodiments of this disclosure, the AF may obtain service data fed back by the terminal device through a non-MBS serving cell, that is, the service data fed back by the terminal device in an out-of-band manner, and then generate the service statistics data according to the service data fed back by the terminal device.

In some embodiments, some or all of the service statistics data may be used as the MBS application assistance information.

In step S430, the MBS application assistance information is transmitted to the core network element, so that the core network element performs resource configuration processing of the MBS according to the MBS application assistance information.

In some embodiments of this disclosure, the AF may transmit the MBS application assistance information to the core network element in an out-of-band manner.

In some embodiments of this disclosure, when the AF determines according to the MBS application assistance information that a quantity of terminal devices processing a broadcast service in a specified area is less than a set quantity, the broadcast service in the specified area can be switched to a multicast service or a unicast service. In this case, after the AF transmits the MBS application assistance information to the core network element, the core network element can also perform resource configuration processing for the adjusted service type.

In some embodiments of this disclosure, when the AF determines according to the MBS application assistance information that a receiving bit error rate of a terminal device processing a broadcast service in a specified area is higher than a set bit error rate, a modulation order for a broadcast service in the specified area can be decreased. In this case, after the AF transmits the MBS application assistance information to the core network element, the core network element can also decrease the receiving bit error rate of the terminal device in the specified area by adjusting the resource configuration, for example, allocating more bandwidth resources for the broadcast service in the specified area.

In some embodiments of this disclosure, when the AF determines according to the MBS application assistance information that a mobile frequency of a terminal device processing a specified broadcast service is higher than a set value, a broadcast area of the specified broadcast service is adjusted, so that a terminal device processing the specified broadcast service and having the mobile frequency higher than the set value is located in the broadcast area. In this case, after the AF transmits the MBS application assistance information to the core network element, the core network element can reallocate transmission resources for the adjusted broadcast area.

The technical solution of the embodiment shown in FIG. 4 is described from the perspective of the AF, and implementation details of the technical solution of the embodiments of this disclosure are described below with reference to FIG. 5 from the perspective of the core network element.

FIG. 5 is a flowchart of a communication method for an MBS according to some embodiments of this disclosure; the communication method for an MBS may be performed by a core network element, in particular by an SMF. Referring to FIG. 5, the communication method for an MBS includes at least step S510 to step S530. A detailed description is as follows:
In step S510, a transmission policy of MBS application assistance information is obtained.

In some embodiments, the transmission policy of the MBS application assistance information can be determined through communication negotiation between the AF and the PCF. Reference may be made to the technical solution of the foregoing embodiment, and details are not described herein.

In step S520, the MBS application assistance information is received according to the transmission policy, where the MBS application assistance information is generated by an application function entity according to service statistics data of a terminal device for processing an MBS.

In some embodiments of this disclosure, the transmission policy of the MBS application assistance information includes at least one of: content of the application assistance information, confidence of the application assistance information, a sample ratio of the application assistance information, an acquisition frequency of the application assistance information, granularity information of the application assistance information, and charging information of the application assistance information.

In some embodiments, the content of the application assistance information includes at least one of: a quantity of terminals processing a specified MBS obtained by the AF, location information of a terminal processing a specified MBS obtained by the AF, and a service statistics characteristic of a specified MBS obtained by the AF.

In some embodiments, location information of the terminal includes at least one of: cell information of the terminal, tracking area information of the terminal, or geographical location information of the terminal. The cell information of the terminal is located is information about a current serving cell of the terminal; the tracking area is also known as TA for short; the geographical location information of the terminal is actual location information of the terminal, such as location information obtained by using the GPS or Beidou satellite system.

In some embodiments, the granularity information of the application assistance information includes at least one of: a user granularity (that is, per-user), a terminal device granularity (that is, per-UE), and a service flow granularity (that is, per-flow).

In step S530, resource configuration processing of the MBS if performed according to the MBS application assistance information.

Specifically, for example, when the AF adjusts the service type in the specified area, the core network element can also adjust the resource configuration in the specified area.

In another example, when the AF determines according to the MBS application assistance information that a receiving bit error rate of a terminal device processing a broadcast service in a specified area is higher than a set bit error rate, a modulation order for the broadcast service in the specified area can be decreased. In this case, the core network element can also decrease the receiving bit error rate of the terminal device in the specified area by adjusting the resource configuration, for example, allocating more bandwidth resources for the broadcast service in the specified area.

In another example, when the AF adjusts a broadcast area of a specified broadcast service so that a terminal device processing the specified broadcast service and having a mobile frequency higher than a set value is located in the broadcast area, the core network element can also reallocate transmission resources for the adjusted broadcast area.

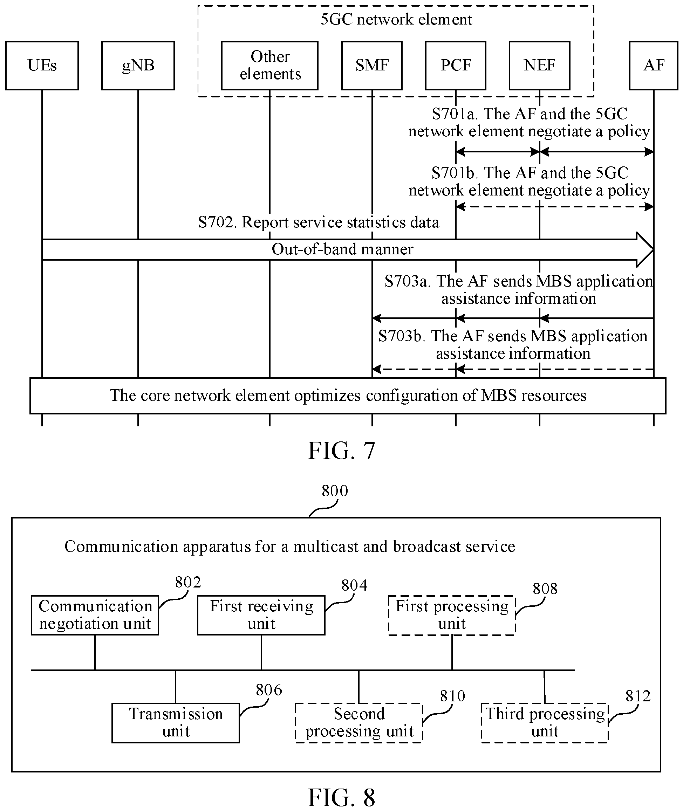

Implementation details of the technical solution of the embodiments of this disclosure are described from the perspective of the AF and the perspective of the core network element, and an interaction process between various entities is described below in detail with reference to FIG. 6 and FIG. 7.

In this embodiment of this disclosure, negotiation processing of the MBS may be performed between the AF and the 5G network, and then MBS application assistance information is transmitted to the 5G core network element according to a transmission policy generated through the negotiation, thereby resolving the network resource allocation and user experience issues caused by the lack of actual user and terminal service data of the 5GC in the 5G MBS broadcast service. Detailed descriptions are provided in the following:
As shown in FIG. 6, a communication method for an MBS according to some embodiments of this disclosure includes the following steps:
In step S610, an AF and a 5GC network element negotiate a policy.

Specifically, as shown in FIG. 7, the negotiation processing between the AF and the 5GC network element may be performed through step S701a or step S701b. In step S701a, the AF can negotiate the policy with a PCF through a NEF; in step S701b, the AF can directly negotiate the policy with the PCF.

In some embodiments, the policy negotiated between the AF and the 5GC network element includes, but is not limited to: content of application assistance information that the AF can provide for the 5GC; a confidence and sample ratio information of application assistance information that the AF can provide for the 5GC; frequency and granularity information of application assistance information that the AF can provide for the 5GC; and charging information formed between a 5G MBS service operator and a third-party AF on application assistance information.

In some embodiments, the content of application assistance information that the AF can provide for the 5GC includes: a quantity of terminals of a certain SMBS and location information of the terminals that can be perceived from the application layer at present; statistics characteristics of a certain 5MBS that the AF can perceive from the application layer at present, for example, playing smoothness and user experience. The type of the terminal perceived by the AF from the application layer include: a terminal in the active state, the inactive state, and the idle state. The location information of the terminal may be location information associated with a serving cell or a TA, or may be geographical location information of the terminal.

In some embodiments, the confidence of application assistance information that the AF can provide for the 5GC is a confidence of the provided application assistance information. The sample ratio of application assistance information that the AF can provide for the 5GC refers to a sample ratio obtained according to big data statistics in spite of a limited quantity of terminals perceivable by the application layer.

In some embodiments, the frequency information of application assistance information that the AF can provide for the 5GC may be the amount of application assistance information obtained per unit time; the granularity information of application assistance information that the AF can provide for the 5GC includes per-user, per-UE, per-flow, and the like.

In step S620, the AF obtains service statistics data of the terminal from the application layer in an out-of-band manner.

The process can be shown in step S702 in FIG. 7, where the out-of-band manner refers to that after the UE establishes a connection with the AF through other manners than the current 5G MBS serving cell, the AF can obtain the service statistics data of the terminal from the terminal.

For example, when one UE obtains the MBS broadcast service downlink through the 5G network, in addition to 4G and non-5G MBS serving cells, the UE may have other 5G connections or Wi-Fi connections that can be used as a connection with the AF or a data channel for out-of-band feedback. In this case, the UE can report service statistics data in an out-of-band manner. The 5G MBS Radio Access Technology (RAT) of such a UE may be in an inactive state or idle state, but the UE can still receive the 5G MBS.

Step S630. The AF interacts with the 5GC, the application assistance information transmitted by the AF being used for optimizing configuration of MBS resources by the 5GC.

In some embodiments, the process may be as shown in step S703a or S703b in FIG. 7. In this example, the AF reports the MBS application assistance information to the SMF; in other embodiments, the MBS application assistance information may also be reported to other core network elements such as the AMF.

In step S703a, the AF transmits the MBS application assistance information to the SMF through the NEF and the PCF; in step S703b, the AF directly transmits the MBS application assistance information to the SMF through the PCF.

After obtaining the MBS application assistance information, the 5GC network element can perform resource configuration processing of the MBS according to the MBS application assistance information. At the same time, the AF may also make an appropriate adjustment according to the MBS application assistance information. For example, if it is found in an out-of-band manner that the quantity of broadcast terminals in a certain area is extremely small, the broadcast can be switched to the unicast or the multicast, thereby improving resource utilization. If it is found in an out-of-band manner that the receiving bit error rate of the terminal in a certain broadcast area is excessively high, the modulation order can be reduced. If it is found in an out-of-band manner that a mobile frequency of a service terminal in a certain area is excessively high, the frequently moving terminal can be placed in one broadcast area by adjusting a range of the broadcast service area.

In summary, according to the technical solutions of the embodiments of this application, the AF may perform the communication negotiation of the MBS with the core network element in the 5G network, and then transmit the MBS application assistance information to the core network element, so that the core network element performs resource configuration processing of the MBS according to the MBS application assistance information, which can help address the problem that the network side cannot obtain the service-related data of the terminal device in the MBS, thereby improving accuracy and rationality of resource configuration in the MBS.

The following describes apparatus embodiments of this disclosure, which can be used for performing the communication method for an MBS in the foregoing embodiments of this disclosure. For details not disclosed in the apparatus embodiments of this disclosure, reference may be made to the foregoing embodiments of the communication method for a multicast and broadcast service of this disclosure.

FIG. 8 is a block diagram of a communication apparatus for an MBS according to some embodiments of this disclosure. The communication apparatus may be disposed in an AF.

Referring to FIG. 8, a communication apparatus 800 for an MBS according to some embodiments of this disclosure includes: a communication negotiation unit 802, a first obtaining unit 804, and a transmission unit 806.

The communication negotiation unit 802 is configured to perform communication negotiation of an MBS with a core network element to determine a transmission policy of MBS application assistance information, where the MBS application assistance information is used for optimizing configuration of MBS resources by the core network element; the first obtaining unit 804 is configured to obtain, according to the transmission policy, service statistics data of a terminal device for processing the MBS, to generate the MBS application assistance information; and the transmission unit 806 is configured to transmit the MBS application assistance information to the core network element, so that the core network element performs resource configuration processing of the MBS according to the MBS application assistance information.

In some embodiments of this disclosure, based on the foregoing solutions, the transmission policy of the MBS application assistance information includes at least one of:
content of the application assistance information, confidence of the application assistance information, a sample ratio of the application assistance information, an acquisition frequency of the application assistance information, granularity information of the application assistance information, and charging information of the application assistance information.

In some embodiments of this disclosure, based on the foregoing solutions, the content of the application assistance information includes at least one of:
a quantity of terminals processing a specified MBS obtained by the application function entity, a state type of a terminal processing a specified MBS obtained by the application function entity, location information of a terminal processing a specified MBS obtained by the application function entity, and a service statistics characteristic of a specified MBS obtained by the application function entity.

In some embodiments, the state type includes: an active state, an inactive state, and an idle state.

In some embodiments of this disclosure, based on the foregoing solutions, the location information of the terminal includes at least one of: cell information of the terminal is located, tracking area information of the terminal, and geographical location information of the terminal.

In some embodiments of this disclosure, based on the foregoing solutions, the granularity information of the application assistance information includes at least one of: a user granularity, a terminal device granularity, and a service flow granularity.

In some embodiments of this disclosure, based on the foregoing solutions, the first obtaining unit 804 is configured to:
obtain service data fed back by the terminal device through a non-MBS serving cell; and
generate the service statistics data according to the service data fed back by the terminal device.

In some embodiments of this disclosure, based on the foregoing solutions, the transmission unit 806 is configured to: transmit the MBS application assistance information to the core network element in an out-of-band manner.

In some embodiments of this disclosure, based on the foregoing solutions, the communication apparatus 800 further includes: a first processing unit 808 configured to switch a broadcast service in a specified area to a multicast service or a unicast service when it is determined according to the MBS application assistance information that a quantity of terminal devices processing the broadcast service in the specified area is less than a set quantity.

In some embodiments of this disclosure, based on the foregoing solutions, the communication apparatus 800 further includes: a second processing unit 810 configured to decrease a modulation order for a broadcast service in a specified area when it is determined according to the MBS application assistance information that a receiving bit error rate of a terminal device processing the broadcast service in the specified area is higher than a set bit error rate.

In some embodiments of this disclosure, based on the foregoing solutions, the communication apparatus 800 further includes: a third processing unit 812 configured to adjust a broadcast area of a specified broadcast service when it is determined according to the MBS application assistance information that a mobile frequency of a terminal device processing the specified broadcast service is higher than a set value, so that the terminal device processing the specified broadcast service and having the mobile frequency higher than the set value is located in the broadcast area.

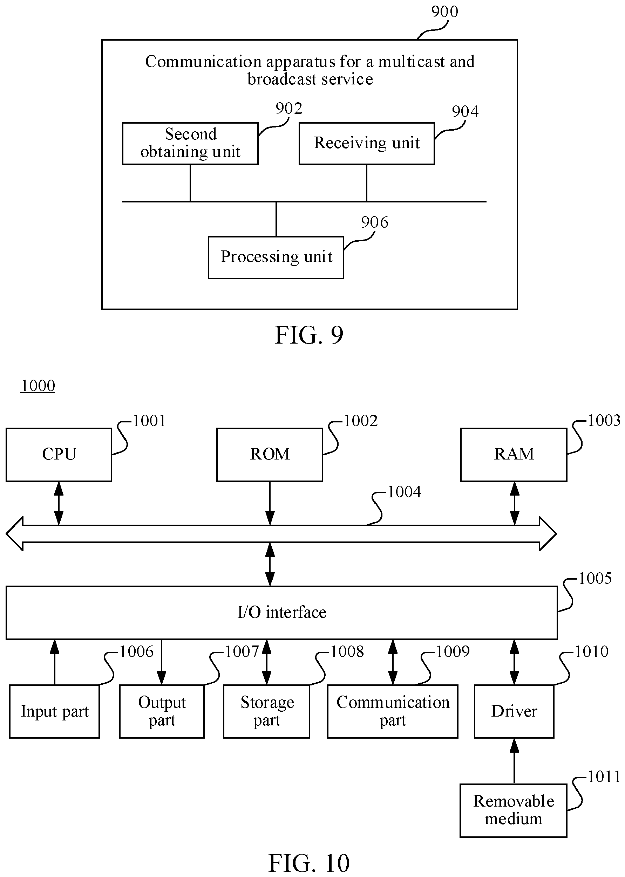

FIG. 9 is a block diagram of a communication apparatus for an MBS according to some embodiments of this disclosure. The communication apparatus may be disposed in a core network element, such as an SMF.

Referring to FIG. 9, a communication apparatus 900 for an MBS according to some embodiments of this disclosure includes: a second obtaining unit 902, a receiving unit 904, and a processing unit 906.

The second obtaining unit 902 is configured to obtain a transmission policy of MBS application assistance information, where the MBS application assistance information is used for optimizing configuration of MBS resources by a core network element; the receiving unit 904 is configured to receive the MBS application assistance information according to the transmission policy, where the MBS application assistance information is generated by an application function entity according to service statistics data of a terminal device for processing an MBS; and the processing unit 906 is configured to perform resource configuration processing of the MBS according to the MBS application assistance information.

FIG. 10 is a schematic structural diagram of a computer system adapted to implement an electronic device according to an embodiment of this disclosure.

A computer system 1000 of the electronic device shown in FIG. 10 is merely an example, and does not constitute any limitation on functions and use ranges of the embodiments of this disclosure.

As shown in FIG. 10, the computer system 1000 includes a central processing unit (CPU) 1001, which may perform various suitable actions and processing based on a program stored in a read-only memory (ROM) 1002 or a program loaded from a storage part 1008 into a random access memory (RAM) 1003, for example, perform the method described in the foregoing embodiments. The RAM 1003 further stores various programs and data required for operating the system. The CPU 1001, the ROM 1002, and the RAM 1003 are connected to each other through a bus 1004. An input/output (I/O) interface 1005 is also connected to the bus 1004.

The following components are connected to the I/O interface 1005: an input part 1006 comprising a keyboard, a mouse, or the like, an output part 1007 comprising a cathode ray tube (CRT), a liquid crystal display (LCD), a speaker, or the like, a storage part 1008 comprising a hard disk, or the like, and a communication part 1009 comprising a network interface card such as a local area network (LAN) card or a modem. The communication part 1009 performs communication processing by using a network such as the Internet. A drive 1010 is also connected to the I/O interface 1005 as required. A removable medium 1011, such as a disk, an optical disc, a magneto-optical disc, or a semiconductor memory, is installed on the drive 1010 as required, so that a computer program read from the removable medium 1011 is installed in the storage part 1008 as required.

Particularly, according to an embodiment of the present disclosure, the processes described above by referring to the flowcharts may be implemented as computer software programs. For example, an embodiment of this disclosure includes a computer program product. The computer program product includes a computer program stored in a computer-readable medium. The computer program includes a computer program used for performing a method shown in the flowchart. In such an embodiment, the computer program may be downloaded and installed through the communication part 1009 from a network, and/or installed from the removable medium 1011. When the computer program is executed by the CPU 1001, the various functions defined in the system of this disclosure are executed.

The computer-readable medium shown in the embodiments of this disclosure may be a computer-readable signal medium or a computer-readable storage medium or any combination thereof. The computer-readable storage medium may be, for example, but is not limited to, an electric, magnetic, optical, electromagnetic, infrared, or semi-conductive system, apparatus, or component, or any combination of the above. A more specific example of the computer-readable storage medium may include but is not limited to: an electrical connection having one or more wires, a portable computer magnetic disk, a hard disk, a random access memory (RAM), a read-only memory (ROM), an erasable programmable read-only memory (EPROM), a flash memory, an optical fiber, a compact disk read-only memory (CD-ROM), an optical storage device, a magnetic storage device, or any appropriate combination thereof. In this disclosure, the computer-readable storage medium may be any tangible medium containing or storing a program, and the program may be used by or used in combination with an instruction execution system, an apparatus, or a device. In this disclosure, a computer-readable signal medium may include a data signal in a baseband or propagated as a part of a carrier wave, the data signal carrying a computer-readable computer program. A data signal propagated in such a way may assume a plurality of forms, including, but not limited to, an electromagnetic signal, an optical signal, or any appropriate combination thereof. The computer-readable signal medium may be further any computer-readable medium in addition to a computer-readable storage medium. The computer-readable medium may send, propagate, or transmit a program that is used by or used in combination with an instruction execution system, apparatus, or device. The computer program comprised in the computer-readable medium may be transmitted by using any suitable medium, comprising but not limited to: a wireless medium, a wire, or the like, or any suitable combination thereof.

The flowcharts and block diagrams in the accompanying drawings illustrate possible system architectures, functions, and operations that may be implemented by a system, a method, and a computer program product according to various embodiments of this disclosure. Each box in a flowchart or a block diagram may represent a module, a program segment, or a part of code. The module, the program segment, or the part of code includes one or more executable instructions used for implementing designated logic functions. In some implementations used as substitutes, functions annotated in boxes may alternatively occur in a sequence different from that annotated in an accompanying drawing. For example, actually two boxes shown in succession may be performed basically in parallel, and sometimes the two boxes may be performed in a reverse sequence. This is determined by a related function. Each block in the block diagram or the flowchart, and a combination of blocks in the block diagram or the flowchart may be implemented by using a dedicated hardware-based system that performs a specified function or operation, or may be implemented by using a combination of dedicated hardware and computer instructions.

Related units described in the embodiments of this disclosure may be implemented in a software manner, or may be implemented in a hardware manner, and the unit described can also be set in a processor. Names of the units do not constitute a limitation on the units in a specific case.

According to another aspect, this disclosure further provides a computer-readable medium. The computer-readable medium may be included in the electronic device described in the foregoing embodiments, or may exist alone and is not assembled in the electronic device. The computer-readable medium carries one or more programs, the one or more programs, when executed by the electronic device, causing the electronic device to implement the method described in the foregoing embodiments.

Although a plurality of modules or units of a device configured to perform actions are discussed in the foregoing detailed description, such division is not mandatory. Actually, according to the implementations of this disclosure, the features and functions of two or more modules or units described above may be specifically implemented in one module or unit. Conversely, features and functions of one module or unit described above may be further divided into a plurality of modules or units for implementation.

Through the descriptions of the foregoing implementations, a person skilled in the art should understands that the exemplary implementations described herein may be implemented through software, or may be implemented through software located in combination with necessary hardware. Therefore, the technical solutions of the embodiments of this disclosure may be implemented in a form of a software product. The software product may be stored in a non-volatile storage medium (which may be a CD-ROM, a USB flash drive, a removable hard disk, or the like) or on the network, including several instructions for instructing a computing device (which may be a personal computer, a server, a touch terminal, a network device, or the like) to perform the methods according to the embodiments of this disclosure.

After considering the specification and practicing the disclosed embodiments, a person skilled in the art may recognize other implementations of this disclosure. This disclosure is intended to cover any variations, uses or adaptive changes of this disclosure. Such variations, uses or adaptive changes follow the general principles of this disclosure, and include well-known knowledge and conventional technical means in the art that are not disclosed in this disclosure.

It is to be understood that this disclosure is not limited to the precise structures described above and shown in the accompanying drawings, and various modifications and changes can be made without departing from the scope of this disclosure. The scope of this disclosure is limited by the appended claims only.

## Claims

1. A communication method for a multicast and broadcast service(MBS), comprising:
performing communication negotiation of an MBS through an application function entity and a core network element to determine a transmission policy of MBS application assistance information, the MBS application assistance information being used for optimizing configuration of MBS resources by the core network element;
obtaining, by the application function entity according to the transmission policy, service statistics data of a terminal device that processes the MBS, to generate the MBS application assistance information; and
transmitting, by the application function entity, the MBS application assistance information to the core network element, the core network element being configured to perform resource configuration processing of the MBS according to the MBS application assistance information.

2. The communication method according to claim 1, wherein the transmission policy of the MBS application assistance information comprises at least one of:
content of the application assistance information, confidence of the application assistance information, a sample ratio of the application assistance information, an acquisition frequency of the application assistance information, granularity information of the application assistance information, and charging information of the application assistance information.

3. The communication method according to claim 2, wherein the content of the application assistance information comprises at least one of:
a quantity of terminal devices that process a specified MBS obtained by the application function entity, a state type of the terminal device that processes the specified MBS obtained by the application function entity, location information of the terminal device that processes the specified MBS obtained by the application function entity, and a service statistics characteristic of the specified MBS obtained by the application function entity.

4. The communication method according to claim 3, wherein the location information of the terminal device comprises at least one of: cell information of the terminal device, tracking area information of the terminal device, and geographical location information of the terminal device.

5. The communication method according to claim 3, wherein the state type of the terminal device indicates one of: an active state, an inactive state, and an idle state.

6. The communication method according to claim 2, wherein the granularity information of the application assistance information comprises at least one of: a user granularity, a terminal device granularity, and a service flow granularity.

7. The communication method according to claim 1, wherein the obtaining, by the application function entity, service statistics data of a terminal device that processes the MBS comprises:
obtaining, by the application function entity, service data fed back by the terminal device through a non-MBS serving cell; and
generating, by the application function entity, the service statistics data according to the service data fed back by the terminal device.

8. The communication method according to claim 1, wherein the transmitting, by the application function entity, the MBS application assistance information to the core network element comprises: transmitting, by the application function entity, the MBS application assistance information to the core network element out-of-band.

9. The communication method according to any one of claims 1 to 8, wherein the communication method further comprises:
switching, by the application function entity, a broadcast service in a specified area to a multicast service or a unicast service, when the application function entity determines that a quantity of terminal devices that process a broadcast service in the specified area is less than a set quantity according to the MBS application assistance information.

10. The communication method according to any one of claims 1 to 8, wherein the communication method further comprises:
decreasing a modulation order of a broadcast service in a specified area when the application function entity determines that a receiving bit error rate of the terminal device that processes the broadcast service in the specified area is higher than a set bit error rate according to the MBS application assistance information.

11. The communication method according to any one of claims 1 to 8, wherein the communication method further comprises:
adjusting a broadcast area of a specified broadcast service to include the terminal device when the application function entity determines that a mobile frequency of the terminal device that processes the specified broadcast service is higher than a set value according to the MBS application assistance information.

12. A communication method for a multicast and broadcast service(MBS), comprising:
obtaining, by a session management function entity, a transmission policy of MBS application assistance information; the MBS application assistance information being used for optimizing configuration of MBS resources by a core network element;
receiving, by the session management function entity, the MBS application assistance information according to the transmission policy, the MBS application assistance information being generated by an application function entity based on service statistics data of a terminal device that processes the MBS; and
performing, by the session management function entity, resource configuration processing of the MBS according to the MBS application assistance information.

13. A communication apparatus for a multicast and broadcast service(MBS), comprising:
a communication negotiation unit, configured to perform communication negotiation of an MBS with a core network element to determine a transmission policy of MBS application assistance information, the MBS application assistance information being used for optimizing configuration of MBS resources by the core network element;
a first obtaining unit, configured to obtain, according to the transmission policy, service statistics data of a terminal device that processes the MBS, to generate the MBS application assistance information; and
a transmission unit, configured to transmit the MBS application assistance information to the core network element, so that the core network element performs resource configuration processing of the MBS according to the MBS application assistance information.

14. A communication apparatus for a multicast and broadcast service(MBS), comprising:
a second obtaining unit, configured to obtain a transmission policy of MBS application assistance information, the MBS application assistance information being used for optimizing configuration of MBS resources by a core network element;
a receiving unit, configured to receive MBS application assistance information according to the transmission policy, the MBS application assistance information being generated by an application function entity according to service statistics data of a terminal device that processes an MBS; and
a processing unit, configured to perform resource configuration processing of the MBS according to the MBS application assistance information.

15. A computer-readable medium, storing a computer program, the computer program, when executed by a processor, implementing the communication method for a multicast and broadcast service (MBS) according to any one of claims 1 to 11, or implementing the communication method for an MBS according to claim 12.

16. An electronic device, comprising:
one or more processors; and
a storage apparatus, configured to store one or more programs, the one or more programs, when executed by the one or more processors, causing the one or more processors to implement the communication method for a multicast and broadcast service (MBS) according to any one of claims 1 to 11, or implement the communication method for an MBS according to claim 12.

17. A computer program product, comprising computer instructions, the computer instructions being stored in a computer-readable storage medium, the computer instructions, when executed, implementing the communication method for a multicast and broadcast service (MBS) according to any one of claims 1 to 11, or implementing the communication method for an MBS according to claim 12.
